# EUROPÄISCHE PATENTSCHRIFT

(11) **EP 0 521 256 B1**
(45) Veröffentlichungstag und Bekanntmachung des Hinweises auf die Patenterteilung: **08.03.1995**
(21) Anmeldenummer: 92107253.4
(22) Anmeldetag: 29.04.1992
(51) Int. Cl.: B25B 15/00, B23P 5/00, B25B 13/00

(54) **Werkzeug mit drehmomentübertragenden Arbeitsflächen und Verfahren zur Herstellung desselben**
Tool with torque transmitting surface and procedure for the production thereof
Outil avec surface de travail transférant un couple et procédé pour la production du même

(30) Priorität: 02.07.1991 DE 4121839
(43) Veröffentlichungstag der Anmeldung: 07.01.1993
(73) Patentinhaber: WERA WERK HERMANN WERNER GMBH & CO., D-42349 Wuppertal (DE)
(72) Erfinder: Hoy, Robert, W-5620 Velbert 15 (DE)
(74) Vertreter: Rieder, Hans-Joachim, Dr.

(56) Entgegenhaltungen:
- CH-A- 317 214
- DE-A- 3 829 033
- DE-U- 8 519 877
- US-A- 2 411 867

## Beschreibung

Die Erfindung bezieht sich auf ein diamantbeschichtetes Schraubwerkzeug und ein Herstellungsverfahren dafür.

Ein derartiges Werkzeug ist aus dem Gebrauchsmuster DE-U-85 19 877 bekannt. Dort werden die sich gegenüberliegenden ebenen Arbeitsflächen durch eine galvanisch aufgetragene metallische Einbettungsschicht mit Diamantsplittern bestückt. Ein diamantbeschichtetes Werkzeug zum Schneiden, Schleifen oder dergleichen ist aus der US-Patentschrift 24 11 867 her bekannt. Dort werden beschichtete Diamantsplitter vollständig in einer Nickelschicht eingebettet. Durch anschließendes teilweises Abtragen der Nickelschicht ragen die Diamantsplitter teilweise über die Schichtoberfläche heraus. Weiter sind nickelbeschichtete Schraubendreher oder Schraubendrehereinsätze mit unterschiedlich gestalteten Arbeitsenden bekannt. Je nach Ausbildung derselben können entweder Schlitzschrauben, Kreuzschlitzschrauben oder Schrauben mit Innensechskant gedreht werden. In der Regel dürfen zur Herstellung der Schraubendreherklingen nur legierte Stähle verwendet werden, um die Voraussetzung einer genügenden Drehmomentübertragung zu erlauben. Zur Erzielung eines Korrosionsschutzes können die Arbeitsenden geschwärzt und konserviert oder auch in einem galvanischen Bad mit einem Nickel-Chrom-Überzug versehen werden. Die Dauerhaftigkeit solcher Schutzmaßnahmen ist oftmals unzureichend. Bei einer Galvanisierung besteht sodann noch die Gefahr einer Wasserstoffversprödung des Arbeitsendes. Darüber hinaus ist die Gefahr des Herausgleitens des Arbeitsendes aus dem Schraubenkopf oder dergleichen erheblich und steht im Zusammenhang mit der Oberflächenstruktur.

Der Erfindung liegt daher die Aufgabe zugrunde, die Arbeitsflächen eines Schraubendrehers oder Schraubendrehereinsatzes zur Drehmomentübertragung optimal auszugestalten, und ein Verfahren zur Herstellung eines Werkzeuges anzugeben.

Gelöst ist die Erfindungsaufgabe durch die im Anspruch 1 angegebene Vorrichtung und durch das im Anspruch 4 angegebene Verfahren.

Die Unteransprüche stellen vorteilhafte Weiterbildungen dar.

Zufolge solcher Ausgestaltung ist erreicht, daß die Arbeitsflächen zunächst eine metallische Abdeckung aus einer harten Grundschicht, z. B. Nickel mit einer Dicke im Bereich von 15 »m besitzen. Dieser im Wege der Galvanisierung aufgetragene Nickelüberzug führt unter Berücksichtigung der Härte von Nickel zu einer gewissen Verschleißminderung bei der Drehmomentübertragung und zu einem Oberflächenschutz insbesondere gegen Korrosion. Als überraschender Effekt ist bei einer derartigen Bemessung der Nickelschicht von etwa 15 »m anzusehen, daß keine beeinträchtigende Wasserstoffversprödung der Arbeitsflächen eintritt. Es ist somit auch die Gewähr einer langen Gebrauchsdauer selbst bei hartem Einsatz des Werkzeugs gewährleistet. Um zusätzlich ein Herausspringen bzw. Herausrutschen des Arbeitsendes aus der Mitnahmeöffnung des Werkstücks zu verhindern, ist die galvanisch aufgetragene metallische Grundschicht zur lediglichen Oberflächenanlage der Reibstoffteilchen und die daran anschließende ebenfalls galvanisch aufgebrachte Einfassungsschicht für die Reibstoffteilchen vorgesehen. Die Diamantsplitter stützen sich zufolge der unterfütternden Grundschicht nicht unmittelbar auf der Stahloberfläche der Arbeitsfläche ab. Zufolge der unterfütternden Grundschicht ist vielmehr eine flächige Beaufschlagung der Stahloberfläche durch den harten Nickelmantel gegeben. Es ist dabei eine solche Dimensionierung getroffen, daß die Dicke der Grundschicht kleiner ist als diejenige der Einfassungsschicht und deren Dicke kleiner ist als die Korngröße der Reibstoffteilchen. Anstelle einer linienförmigen Anlage der Arbeitsflächen bei einem Schraubendreher erhält man dadurch kontinuierlich mit größer werdendem Drehmoment eine Flächenanlage, wobei die die Einfassungsschicht überragenden Reibstoffteilchen-Bereiche in eingrabenden Formschluß treten zu den Mitnahmeflächen des Werkstücks. Bei Ausbildung desselben als Schraube bedeutet dies, daß die Arbeitsflächen sich gewissermaßen in die Schlitzwandung des Schraubenkopfes eingraben, und zwar begrenzt tief, z. B durch die härtere Schicht (Nickel) des ganzen Arbeitsendes. Die auf die Arbeitsflächen einwirkende Flächenbelastung wird optimal, so daß im Verhältnis zur Schraubengröße optimale Drehmomente übertragbar sind. Aus der schweizerischen Patentschrift 317 214 ist bereits ein Zweischichtensystem zur Herstellung einer verschleißfesten Oberfläche bekannt. Dort ist eine erste galvanische Grundschicht zur Oberflächenanlage der Reibstoffteilchen vorgesehen, auf welcher eine weitere Metallschicht aufgedampft worden ist. Die Grundschicht hat dort die Dicke von etwa der Hälfte der Korngröße, und die Einfassungsschicht ist dünner als die Grundschicht.

Kraftübertragungsgünstig erweist es sich, daß sich die Reibstoffteilchen dabei an der gleich harten metallischen Grundschicht (Nickel) abstützen können, so daß die Krafteinleitung unmittelbar in die Arbeitsflächen erfolgt. Als überraschend ist beim Aufbringen der Reibstoffteilchen mit der Einfassungsschicht anzusehen, daß, abgesehen von den Kehlenbereichen, über Teilbereiche eine mono-partikulare Schicht der Reibstoffteilchen erzeugt wird, und zwar statistisch gesehen. Dies entspricht im Kraftübertragungsbereich der Arbeitsflächen einer einschichtigen Lage der Reibstoffteilchen. Die Stabilitätsminderung, die das Arbeitsende durch die notwendige Untergröße (ca. 3/100 mm) erfahren muß, ist kompensiert durch die entsprechende Beschichtung, so daß kein Nachteil hinsichtlich einer Stabilitätseinbuße eintritt. Es erweist sich als vorteilhaft, für die Grundschicht und für die Einfassungsschicht Nickel oder ein Metall der 1. bis 8. Gruppe zu verwenden. Sodann bietet es sich an, die Grundschicht mit einer Dicke von ca. 1 - 100 »m zu erstellen und eine Korngröße zwischen 3 und 500 »m zu wählen. Bei relativ kleiner Korngröße erscheint die Beschichtung mit den Reibstoffteilchen für das menschliche Auge als schattierter Bereich der Arbeitsfläche. Es wurde gefunden, daß eine Variation des Auftragens der Partikel im galvanischen Bad an den verschiedenst gerichteten und gegebenenfalls strukturierten Flächen des Arbeitsendes stattfindet. So erhält man an den etwa radial einwärts gerichteten Arbeitsflächen im Kehlenverlauf eine größere Ansammlung von Partikeln als an den übrigen Bereichen. Auch ergibt sich umfangsseitig der Rippen aufgrund einer Drehbearbeitung der Abtriebsspitze ein etwa wellenförmiger Verlauf verbunden damit, daß in den Wellentälern die größere Ansammlung der Partikel auftritt. Dies alles trägt dazu bei, daß das Arbeitsende in stabilen Sitz zum Kreuzschlitz der Schraube gelangt, der einem Herausgleiten des Arbeitsendes entgegenwirkt. Die Einfassungsschicht liegt in ihrer Dicke jedoch stets unterhalb der Korngröße der Reibstoffteilchen. Die Korngröße ist dabei abhängig von dem jeweiligen Einsatzzweck. Je größer die Korngröße wird, desto mehr nimmt der "Cam-Out-Effekt" ab. Weiterhin ist noch hervorzuheben, daß bei dem Auftragen der Schichten einschließlich der Reibstoffteilchen das Arbeitsende keiner schädlichen Erhitzung unterliegt, so daß die Festigkeit des Arbeitsendes gewährleistet bleibt. Eine solche Erhitzung tritt beim bekannten Auftragen von Reibstoffteilchen im Wege des Hartlötens auf (z. B. DE-OS 38 29 033).

Bei einem Herstellungsverfahren eines erfindungsgemäßen Werkzeuges wird zunächst auf die Arbeitsfläche galvanisch die metallische Grundschicht aufgebracht. Danach erfolgt das Auftragen der in Oberflächenanlage zur Grundschicht tretenden, aus metallischen oder mineralischen Werkstoffen bestehenden Reibstoffteilchen durch galvanische Einbettung in der Einfassungsschicht, welche die Zwischenräume der einzeln nebeneinander befindlichen Reibstoffteilchen bis zu einem Teil ihrer Höhe ausfüllt. Mit dem dann die Einfassungsschicht überragenden Bereich greifen die Reibstoffteilchen bei der Drehmomentübertragung in die entsprechenden Mitnahmeflächen des Werkstoffs ein und gewähren eine besonderes gute Mitnahme des Werkstücks und beugen einem Herausspringen des Arbeitsendes aus dem Werkstück vor.

Ein Ausführungsbeispiel der Erfindung wird nachstehend anhand der Figuren 1 bis 5 erläutert. Es zeigt:
- Fig. 1: eine Ansicht eines als Schraubendreher für Schrauben mit Kreuzschlitz ausgestatteten Werkzeugs in etwa natürlicher Größe,
- Fig. 2: in vergrößerter Darstellung das Arbeitsende der Schraubendreherklinge,
- Fig. 3: in stark vergrößerter Darstellung den Ausschnitt nach dem Kreis III in Figur 2,
- Fig. 4: ebenfalls vergrößert dargestellt einen Querschnitt durch das Arbeitsende und
- Fig. 5: einen teilweisen Längsschnitt durch das Arbeitsende im Bereich einer durch Schlitze gebildeten Rippe.

Das in Form eines Schraubendrehers 1 ausgebildete Werkzeug besitzt einen Griff 2 mit in diesem eingelassener Klinge 3. Wie das Arbeitsende 4 der Klinge veranschaulicht, dient der Schraubendreher 1 zur Mitnahme von Kreuzschlitzschrauben. Erzeugt ist das im Querschnitt kreuzförmig gestaltete Arbeitsende 4 durch vier in gleicher Winkelverteilung angeordnete Rippen 12 und Schlitze bzw. Kehlen 11, deren Wandungen Arbeitsflächen 5 bilden, mit denen der Schraubendreher bzw. dessen Arbeitsende 4 am Kreuzschlitz einer Kreuzschlitzschraube angreift.

Zwecks Erzielung eines Korrosionsschutzes des Arbeitsendes 4 und einer optimalen Drehmomentübertragung weist das Arbeitsende 4 eine mehrlagige Beschichtung 6 auf. Unmittelbar auf den Arbeitsflächen 5 befindet sich eine galvanisch aufgebrachte Grundschicht 7. Diese besteht aus Nickel oder einem Metall der 1. bis 8. Gruppe und weist eine Dicke x von ca. 5»m auf. Die Dicke der Grundschicht 7 kann im übrigen zwischen 1 und 100»m liegen. Letztere dient zur Anlage von Reibstoffteilchen 8 bildenden Diamantsplittern, welche Reibstoffteilchen 8 mit einer anschließend ebenfalls galvanisch aufgebrachten Einfassungsschicht auf die Arbeitsflächen 5 aufgetragen werden. Für die Einfassungsschicht 9 ist ebenfalls Nickel gewählt. Die Einfassungsschicht 9 füllt dabei die Zwischenräume der einzeln nebeneinander befindlichen Reibstoffteilchen bis zu einem Teil ihrer Höhe aus. Der Niveauspiegel dieser Einfassungsschicht ist im Bereich der Reibstoffteilchen 8 leicht hochgezogen, was die Verankerung der Reibstoffteilchen noch verbessert.

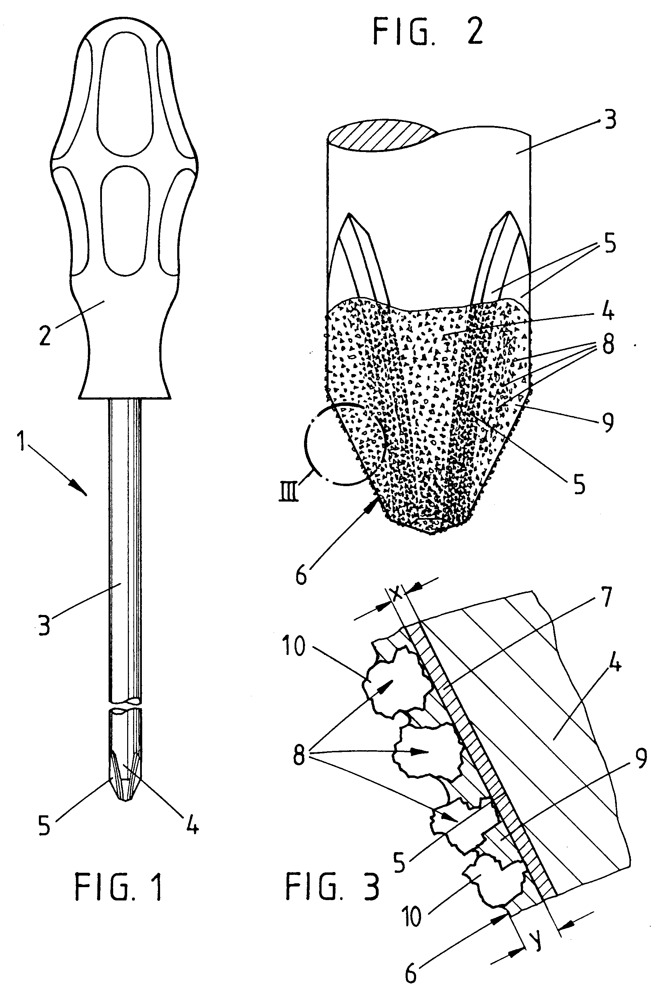

Es geht aus Figur 3 hervor, daß die Dicke x der Grundschicht 7 kleiner ist als die Dicke y der Einfassungsschicht 9. Die Dicke y entspricht etwa einem zweifachen der Dicke x. Sodann geht aus dieser Figur 3 hervor, daß die Korngröße der sich unmittelbar an der Grundschicht 7 abstützenden Reibstoffteilchen 8 größer ist als die Dicke y. Auf diese Weise werden die Einfassungsschicht 9 überragende Abschnitte 10 erzeugt. Beim Ausführungsbeispiel bewegt sich die Korngröße bei ca. 50»m. Je nach Einsatzzweck kann jedoch eine Korngröße zwischen 3 und 500»m gewählt werden. Stets ist jedoch zu berücksichtigen, daß die Korngröße größer ist als die Dicke y der Einfassungsschicht 9.

Bei der galvanischen Aufbringung der Einfassungsschicht 9, in welcher die Reibstoffpartikelchen 8 teilweise eingebettet sind, ergibt sich, abgesehen von den Kehlengrundbereichen, über Teilbereiche, statistisch gesehen, eine monopartikulare Schicht aus Reibstoffteilchen 8. Die Schicht-für-Schicht Auftragung erfolgt in dem Galvanobad mit ca. 75 Milliampere in drei durch Diaphragma-Wände geteilten Abteilen eines Badbehälters.

Mit beginnender Drehmomentübertragung liegt vorerst eine linienförmige Abstützung der Arbeitsflächen an den Mitnahmeflächen der Schraube vor. Mit größer werdendem Drehmoment, bedingt beispielsweise durch weiteres Eindrehen der Schraube bzw. in der Anzugsphase derselben, geht die linienförmige Abstützung in eine flächenmäßige über, wobei die Reibstoffteilchen 8 mit ihren vorstehenden Abschnitten 10 sich in das Material der Schlitzwandung der Schraube eingraben und somit zu einer günstigen spezifischen Flächenbelastung führen. Auf diese Weise können hohe Drehmomente übertragen werden, ohne daß das Arbeitsende 4 des Schraubendrehers 1 aus dem Kreuzschlitz der Schraube herausspringt. Da gleichzeitig die Abstützung der Reibstoffteilchen 8 an der Grundschicht 7 vorliegt, trägt dieses zu einer insgesamt optimalen Drehmomentübertragung bei. Aufgrund der die Zwischenräume zwischen den einzelnen nebeneinander befindlichen Reibstoffteilchen 8 ausfüllenden Einfassungsschicht 9 bis zu einem Teil der Höhe der Reibstoffteilchen sind diese ihrerseits auch schubfest verankert.

Zufolge der Beschichtung 6, die sich aus der Grundschicht 7, den Reibstoffteilchen 8 und der Einfassungsschicht 9 zusammensetzt, ist es erforderlich, daß Arbeitsende 4 mit entsprechendem Untermaß (ca. 3/100 mm) zu erstellen, damit nach der Beschichtung dennoch das Arbeitsende in der Norm liegt. Obwohl durch das Untermaß naturgemäß eine Stabilitätsminderung auftritt, wird diese kompensiert durch die Beschichtung 6.

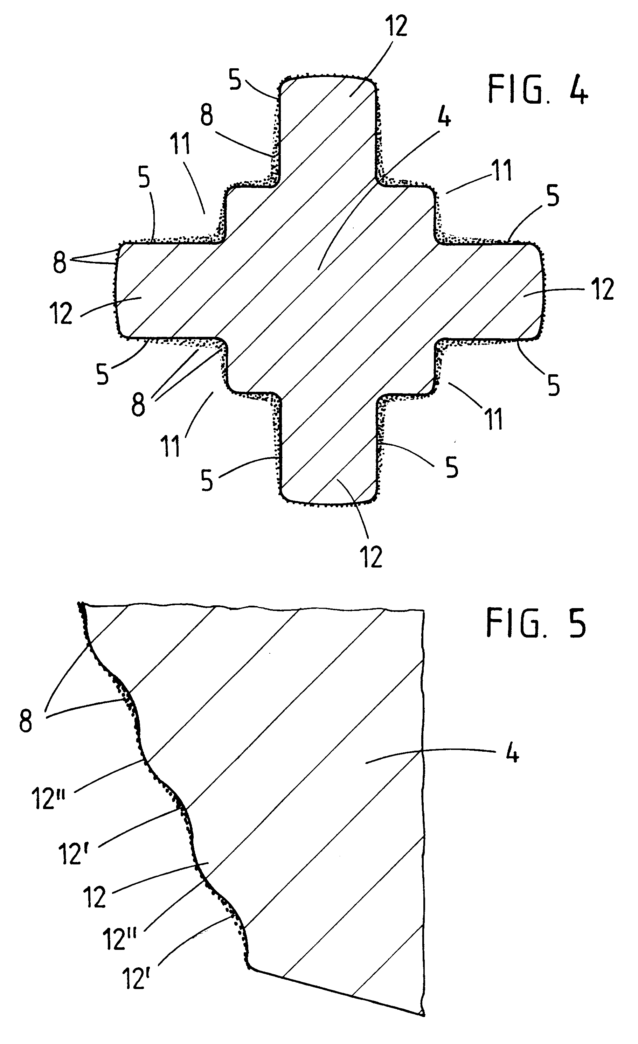

Aus den Fig. 4 und 5 geht eine Variation des Auftrages der Partikel bzw. Reibstoffteilchen an den verschiedenst gerichteten und strukturierten Flächen hervor. Fig. 4 veranschaulicht insbesondere, daß eine Ansammlung von Reibstoffteilchen 8 an den etwa radial gerichteten Arbeitsflächen 5 im Kehlenverlauf auftritt, welche Ansammlung in Richtung der Rippenumfangsfläche abnimmt.

Wird die Abtriebsspitze des Bits durch Verformen eines Drehrohlings mit kegelstumpfförmig zulaufendem Ende erzeugt, so besitzen die Rippen 12 nach der Verformung - unter dem Mikroskop betrachtet - eine von den Bearbeitungsriefen gebildete, etwa wellenförmige Gestaltung. Hier ist die Ansammlung von Reibstoffteilchen 8 in den Wellentälern 12' größer als an den Wellenbergen 12''. Dies führt zu einem besonders stabilen Sitz des Arbeitsendes 4 in dem Kreuzschlitz einer Schraube und wirkt einem Herausspringen des Arbeitsendes 4 aus dem Kreuzschlitz erheblich entgegen.

Beim Ausführungsbeispiel ist dargestellt, daß die Arbeitsflächen eines Schraubendrehers für Kreuzschlitzschrauben entsprechend behandelt sind. In gleicher Weise ist es möglich, die Arbeitsflächen von Schraubendrehereinsätzen zu gestalten, ungeachtet ihrer Form. Weiterhin wäre es möglich, die Arbeitsflächen von Steckschlüsseln, Ringschlüsseln, Maulschlüsseln etc. in gleicher Weise zu behandeln.

## Patentansprüche

1. Schraubendreher (1) oder Schraubendrehereinsatz mit einem winklig zueinander angeordnete Flächen aufweisendes Arbeitsende (4), welches sich gegenüberliegende drehmomentübertragende Arbeitsflächen (5) ausbildet und welches mit einem galvanisch aufgetragenen Überzug (9) aus Nickel oder dergleichen und einer darin eingebetteten einschichtigen Lage von Diamantsplittern (8) versehen ist, wobei der Überzug als eine zur lediglichen Oberflächenanlage der Diamantsplitter (8) dienende Grundschicht (7) und eine anschließend ebenfalls galvanisch aufgebrachte Einfassungsschicht (9) für die Diamantsplitter (8) gestaltet ist, wobei die Dicke (x) der Grundschicht (7) kleiner ist als diejenige der Einfassungsschicht (9) und deren Dicke (y) kleiner ist als die Korngröße der Diamantsplitter (8).

2. Schraubendreher oder Schraubendrehereinsatz nach Anspruch 1, dadurch gekennzeichnet, daß die Grundschicht (7) zwischen 1 und 100»m und die Korngröße zwischen 3 und 500»m liegt.

3. Schraubendreher oder Schraubendrehereinsatz nach Anspruch 2, dadurch gekennzeichnet, daß die Dicke der Nickelschicht (7) im Bereich von 15»m liegt.

4. Verfahren zur Herstellung eines Werkzeuges gemäß Anspruch 1, dadurch gekennzeichnet, daß zunächst auf die Arbeitsfläche (5) galvanisch eine metallische Grundschicht (7) und daran anschließend in Oberflächenanlage zu dieser Reibstoffteilchen (8) aufgebracht werden, deren Korngröße größer ist als die Dicke (x) der Grundschicht (7), mit einer die Zwischenräume der einzelnen nebeneinander befindlichen Reibstoffteilchen (8) lediglich bis zu einem Teil ihrer Höhe ausfüllenden, galvanisch aufzutragenden Einfassungschicht (9) für die einschichtige Lage von sich auf der Grundschicht gegen die Arbeitsfläche (5) abstützenden Reibstoffteilchen (8).

## Claims

1. Screwdriver (1) or screwdriver bit with a working end (4) which comprises surfaces arranged at an angle to each other and which forms mutually opposed torque-transmitting working faces (5) and which is provided with a coating (9) of nickel or the like applied by electroplating and a single-ply layer of diamond chips (8) embedded therein, wherein the coating is designed as a base layer (7) serving merely for surface contact with the diamond chips (8) and a setting layer (9) for the diamond chips (8) which is also applied by electroplating subsequently, wherein the thickness (x) of the base layer (7) is less than that of the setting layer (9) and the thickness (y) thereof is less than the particle size of the diamond chips (8).

2. Screwdriver or screwdriver bit according to claim 1, characterised in that the base layer (7) is between 1 and 100 »m and the particle size between 3 and 500 »m.

3. Screwdriver or screwdriver bit according to claim 2, characterised in that the thickness of the nickel layer (7) is in the region of 15 »m.

4. Method for the manufacture of a tool according to claim 1, characterised in that first a metal base layer (7) is applied by electroplating to the working face (5) and then subsequently, in surface contact with the base layer (7), particles of friction material (8) are applied, of which the particle size is greater than the thickness (x) of the base layer (7), with a setting layer (9) for the single-ply layer of particles of friction material (8) supported on the base layer against the working face (5), which setting layer (9) fills the gaps between the individual adjacent particles of friction material (8) only up to a portion of their height and is to be applied by electroplating.

## Revendications

1. Tournevis (1) ou accessoire interchangeable pour tournevis, présentant une extrémité de travail avec des surfaces présentant une certaine distribution angulaire l'une par rapport à l'autre (4), et formant des surfaces de travail (5) se faisant face et qui servent à la transmission d'un couple de rotation et qui est muni d'un revêtement électrolytique (9), en nickel ou similaire, dans lequel est noyée une couche non lamellaire composée de fragments de diamants (8), le revêtement étant sous forme d'une couche de base (7) constituant simplement un appui superficiel pour les fragments de diamants (8) et une couche ultérieure de fixation (9) également appliquée électrolytiquement, conçue pour les fragments de diamant (8), l'épaisseur x de la couche de base 7 étant inférieure à l'épaisseur de la couche de fixation 9 et l'épaisseur y de cette dernière étant inférieure à la taille des grains des fragments de diamant (8).

2. Tournevis ou outil interchangeable pour tournevis selon la revendication 1, caractérisé en ce que la couche de base (7) est comprise entre 1 et 100 »m et la taille des grains est comprise entre 3 et 500 »m.

3. Tournevis ou outil interchangeable pour tournevis selon la revendication 2, caractérisé en ce que l'épaisseur de la couche de nickel (7) est aux alentours de 15 »m.

4. Procédé de fabrication d'un outil selon la revendication 1, caractérisé en ce qu'on procède d'abord à l'application, par voie électrolytique, d'une couche de base (7) sur la surface de travail (5), suivie par des particules d'un matériau de friction (8) qui viennent en appui superficiel avec cette dernière, et dont la taille des grains est supérieure à l'épaisseur x de la couche de base (7), avec une couche de fixation (9), appliquée par voie électrolytique, pour la plage monocouche des particules de matériau à friction (8) en appui sur la couche de base contre la surface de travail (5) et qui remplit les interstices des différentes particules proches l'une de l'autre du matériau à friction (8), uniquement jusqu'à une fraction de leur hauteur.
